Europäisches Patentamt

European Patent Office

Office européen des brevets

(11) Veröffentlichungsnummer: **0 359 845**
**A1**

## (12) EUROPÄISCHE PATENTANMELDUNG

(21) Anmeldenummer: 88115378.7

(22) Anmeldetag: 20.09.88

(51) Int. Cl.⁵: **B62M 3/08**

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: UNION Sils, van de Loo & Co.
GmbH
Ardeyer Strasse 13/15
D-5758 Fröndenberg/Ruhr(DE)

(72) Erfinder: Pettite, Alan Jack,
70, Whitworth Road,
South Norwood, London S.E. 25 6XJ(GB)

(74) Vertreter: Patentanwaltsbüro Cohausz &
Florack
Postfach 14 01 20 Schumannstrasse 97
D-4000 Düsseldorf 1(DE)

(54) **Fahrradpedale und Schuhplatte.**

(57) Es wird eine Fahrradpedale (2) in Kombination
mit einer Schuhplatte beschrieben, die an einem
Schuh befestigt werden kann. Die Pedale ist ein
Kunststoff-Formteil und besitzt eine Halteeinrichtung,
die in der Eingriffsstelle der Schuhplatte diese gegen
eine Vorwärts-, Rückwärts- oder Aufwärtsbewegung
relativ zur Pedale sichert. Die Halteeinrichtung besitzt ein vorderes hakenförmiges Element (11), unter
dem die Vorderseite der Schuhplatte in der Eingriffsstellung angeordnet ist, eine feste hintere Eingriffseinrichtung, die eine Rückwärtsbewegung der
Schuhplatte in der Eingriffsstellung verhindert, und
ein hinteres bewegliches hakenförmiges Klauenelement (17), das derart mit der Pedale ausgebildet ist,
daß es in der Eingriffsstellung eine Aufwärtsbewegung der Schuhplatte verhindert, jedoch selbst unbelastet ist und die Schuhplatte nicht nach vorne
drückt, sondern elastisch nach hinten bewegbar ist,
um die Schuhplatte bei einer Drehung derselben in
ihrer eigenen Ebene freizugeben.

Fig 4.

## Fahrradpedale und Schuhplatte

Die Erfindung betrifft eine Fahrradpedale und eine Schuhplatte zum Eingriff mit derselben.

Normalerweise befinden sich die Füße eines Radfahrers auf den Pedalen, und das Fahrrad wird durch einen nacheinander auf die Pedalen ausgeübten Druck vorwärtsbewegt. Für Fahrradtouren und Radrennen ist es jedoch zweckmäßig, wenn der Druck auch bei der Aufwärtsbewegung der Pedalen auf diese ausgeübt werden kann. Zu diesem Zwecke sind Bänder oder Klemmen verschiedener Arten bekannt, mit denen der Schuh an der Pedale befestigt wird.

Eine solche bekannte Kombination aus einer Pedale und einer Schuhplatte (die normalerweise mit der Sohle des Schuhs verschraubt ist), ist in der EP-PS 01 46 545 beschrieben. Bei dieser Ausführungsform besitzt die Pedale an der Vorderseite eine Halteeinrichtung, unter der die Vorderseite der Schuhplatte angeordnet wird, um eine Vorwärts- und Aufwärtsbewegung der Schuhplatte zu verhindern, eine feste Lagereinrichtung an der Hinterseite, die eine Rückwärtsbewegung der Schuhplatte verhindert, sowie eine federbelastete Klaue an der Hinterseite, die über die Rückseite der Schuhplatte greift, um sowohl die Schuhplatte nach vorne zu drücken als auch eine Abwärtsbewegung des hinteren Teils der Schuhplatte zu verhindern. Die Feder, die die Klaue belastet, steht somit permanent unter Druck und ist um einen Gewindestift herum angeordnet, wobei eine auf dem Stift befindliche Mutter die Klaue haltert und die Feder belastet. Diese Ausführungsform ist jedoch teuer in der Herstellung, da sie getrennte Teile benötigt, die zusammengebaut werden müssen, da sie gewartet werden muß und durch Abscheren des Gewindestiftes, des Gewindes oder der Feder gegenüber Defekten anfällig ist, was zu Unglücken führen kann, wenn der Fuß plötzlich und unbeabsichtigt freigegeben wird, wenn sich der Radfahrer mit hoher Geschwindigkeit bewegt.

Der Erfindung liegt die Aufgabe zugrunde, eine entsprechende Kombination aus einer Pedalen und einer Schuhplatte zu schaffen, die billiger in der Herstellung ist, eine geringere Neigung zu Defekten aufweist und im wesentlichen wartungsfrei ist.

Gemäß einem Aspekt der Erfindung werden eine Fahrradpedale und Schuhplatte zur Verfügung gestellt, wobei die Pedale aus geformtem Kunststoff besteht und eine einstückig darin eingeformte Halteeinrichtung zum Haltern der Schuhplatte an der Pedale in einer Eingriffsstellung aufweist, welche Halteeinrichtung eine Klaue besitzt, die elastisch mit dem restlichen Teil der Pedale verbunden ist, so daß sie in der normalen Eingriffsstellung der Pedale unbelastet ist, jedoch elastisch bewegbar ist, um die Schuhplatte bei einer Drehung derselben in ihrer eigenen Ebene freizugeben.

Dadurch, daß die Klaue einstückig mit dem Pedalenkörper geformt wird, ist die Pedale relativ billig, wartungsfrei und viel weniger anfällig gegenüber Brüchen oder einem Abscheren als die aus Feder, Stift und Mutter bestehende Ausführungsform der vorstehend genannten Veröffentlichung 01 46 454.

Gemäß einer bevorzugten Ausführungsform der Erfindung wird eine Fahrradpedale in Kombination mit einer Schuhplatte, die an einem Schuh befestigt werden kann, zur Verfügung gestellt, wobei die Pedale aus geformtem Kunststoff besteht und eine Halteeinrichtung aufweist, die in der Eingriffsstellung der Schuhplatte diese daran gegen eine Vorwärts-, Rückwärts- oder Aufwärtsbewegung relativ dazu haltert und ein vorderes hakenförmiges Element aufweist, unter dem die Vorderseite der Schuhplatte in der Eingriffsstellung angeordnet ist, eine feste hintere Eingriffseinrichtung, die eine Rückwärtsbewegung der Schuhplatte in der Eingriffsstellung verhindert, und ein bewegliches hinteres hakenförmiges Klauenelement, das mit der Pedale ausgebildet ist, so daß es in der Eingriffsstellung eine Aufwärtsbewegung der Schuhplatte verhindert, jedoch selbst unbelastet ist und die Schuhplatte nicht nach vorne drückt, daß jedoch elastisch nach hinten bewegbar ist, um die Schuhplatte bei einer Drehung derselben in ihrer eigenen Ebene freizugeben.

Vorzugsweise sind die Vorderseite der Schuhplatte und das vordere Eingriffselement der Halteeinrichtung mit einer Nut und einem Stift, welche zusammenwirken, ausgestattet, so daß die Drehung der Schuhplatte zu ihrer Freigabe um die Achse des Stiftes verläuft. Eine nach hinten weisende Fläche der Schuhplatte ist um die Achse des Stiftes gekrümmt und steht mit einer entsprechenden gekrümmten nach vorne weisenden Fläche an den hinteren Halteteilen in Eingriff, so daß eine glatte Drehbewegung zur Freigabe der Schuhplatte sichergestellt wird.

Nachfolgend wird ein Ausführungsbeispiel einer Pedale und Schuhplatte in Verbindung mit der Zeichnung im einzelnen erläutert. Es zeigen:

Figur 1 eine Draufsicht auf eine Schuhplatte;

Figur 2 einen Schnitt nach Linie XI-XI in Figur 1, der die Schuhplatte in einem an der Sohle eines Schuhes befestigten Zustand zeigt;

Figur 3 eine Draufsicht auf die Schuhplatte, die sich in Eingriff mit einer Pedale befindet;

Figur 4 einen Schnitt entlang Linie IV-IV in Figur 3;

Figur 5 eine Teilrückansicht in Richtung des Pfeiles V in Figur 3;

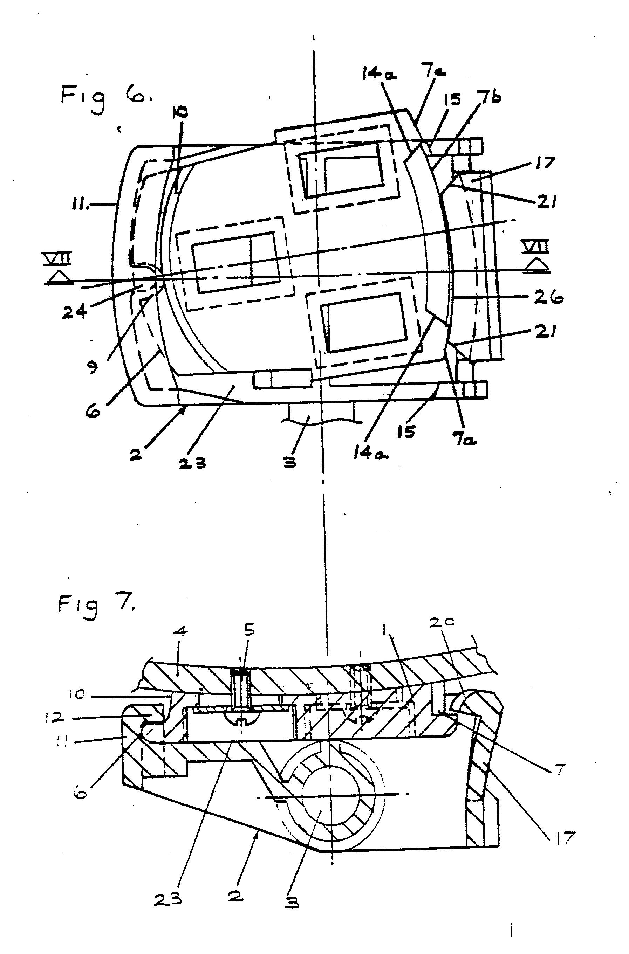

die Figuren 6 und 7 Ansichten ähnlich den Figuren 3 und 4, die die Schuhplatte im von der Pedale freigegebenen Zustand zeigen; und

Figur 8 eine schematische Ansicht, die die Schuhplatte im Eingriff mit der Pedale zeigt.

Eine Schuhplatte 1 kann mit einer Pedale 2, die mit einer Pedalenspindel 3 versehen ist, in Eingriff gebracht werden. Die Schuhplatte kann über drei Schrauben 5 und Unterlegscheiben 5a an der Sohle 4 eines Schuhes befestigt werden. Die Schrauben erstrecken sich durch Schlitze 12, die eine Einstellung der Position der Schuhplatte am Schuh ermöglichen. Eine vordere Lippe 6 der Schuhplatte ist abgerundet und mittig mit einer im Schnitt im wesentlichen halbkreisförmig ausgebildeten Nut 9 versehen, die eine Vertikalachse 8 besitzt. Die Hinterseite 7 der Schuhplatte besitzt gekrümmte Randflächen 7a, die um die Achse 8 gekrümmt sind, eine mittlere untere gekrümmte Fläche 7b mit geringfügig kleinerem Radius, die jedoch ebenfalls um die Achse 8 gekrümmt ist, und einen abgetrennten oberen mittleren Abschnitt 7c mit einer Endfläche 7d, die ebenfalls um die Achse 8 gekrümmt ist. Nockenflächen 14a, die unter einem Winkel von etwa 45° zur Längsachse der Schuhplatte angeordnet sind, verbinden die Fläche 7c mit den Flächen 7a. Die Schuhplatte ist aus Kunststoff, beispielsweise Nylon, geformt.

Die Pedale 2 ist ebenfalls einstückig aus Kunststoff, vorzugsweise einem Acetalharz, beispielsweise Delryn, geformt. Die Pedale besitzt eine obere Lagerfläche 23, die mit der Basis der Schuhplatte in der Eingriffsstellung in Eingriff steht, ein vorderes Halteelement 11, das von der Lagerfläche nach oben und hinten vorsteht, so daß es einen nach hinten weisenden Schlitz 11a bildet, in den sich die nach vorne vorstehende Lippe 6 der Schuhplatte erstreckt. Die vordere gekrümmte Fläche 10 der Schuhplatte ist von der nach hinten weisenden Fläche des hakenförmigen Teiles 12 des Halteelementes 11 geringfügig frei. Das Halteelement 11 ist an der Längsachse der Pedale mit einem sich nach oben erstrekkenden Stift 24 versehen, dessen Achse 8 im wesentlichen mit der Achse der Nut 9 der Schuhplatte in der Eingriffsstellung zusammenfällt. Dieser Stift ist so ausgebildet, daß er mit Spiel in die Nut paßt, so daß ein entsprechender Schwenkvorgang der Schuhplatte aus deren Eingriffsstellung zur Freigabe derselben im wesentlichen um die Achse 8 geführt wird.

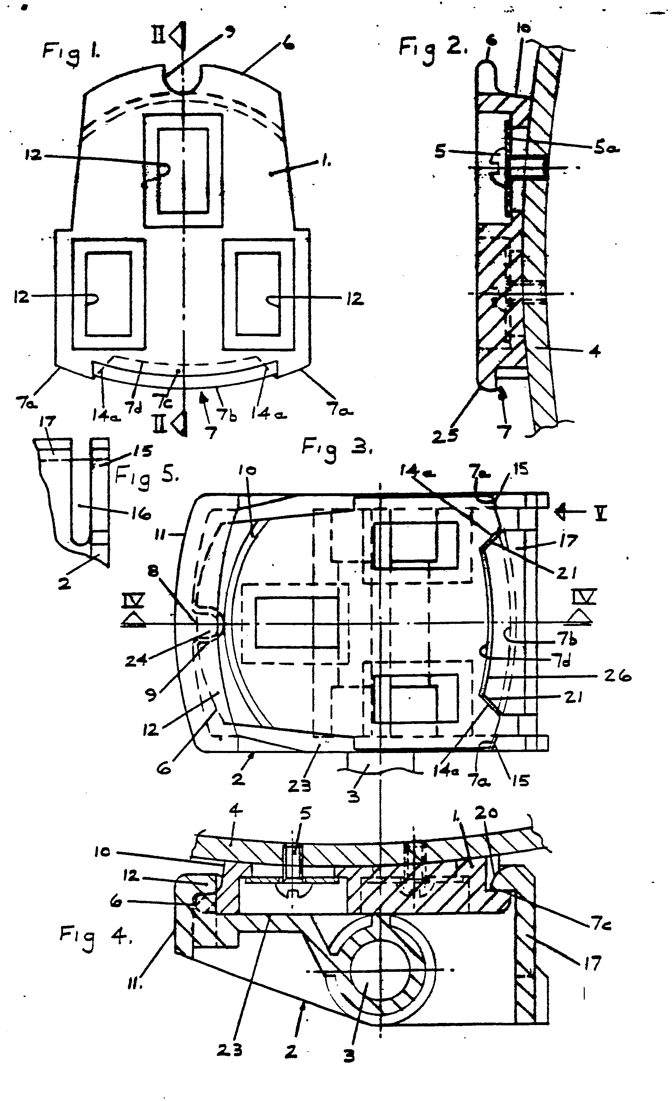

Die Hinterseite der Pedale ist mit einer aufrechtstehenden Halteeinrichtung versehen, die an jeder Seite gekrümmte Lagerflächen 15 aufweist, welche um die Achse 8 gekrümmt sind, sowie eine mittlere, elastisch bewegbare, hakenförmige Klaue 17. Die Klaue ist nur mit der Basis der Pedale verbunden und von den Seiten 15 über Schlitze 16 getrennt, wie in Figur 5 gezeigt ist. Diese Verbindung ermöglicht, daß die Klaue elastisch rückwärtsbewegt werden kann, jedoch aufgrund des natürlichen Speichervermögens des Kunststoffs in ihre unbelastete Position zurückkehren kann. In der Eingriffsstellung der Schuhplatte befindet sich die Klaue in einem unbelasteten Zustand. Die Flächen 15 stehen mit den Flächen 7a der Schuhplatte in der Eingriffsstellung in Eingriff und wirken einer Rückwärtsbewegung der Schuhplatte entgegen. In dieser Stellung sind die vorwärtsweisenden Flächen der Klaue 17 von den nach hinten weisenden Flächen der Schuhplatte frei. Die Klaue besitzt ein nach vorne vorstehendes Hakenelement 20, das über den hinteren mittleren Abschnitt der Schuhplatte greift und eine Aufwärtsbewegung der Schuhplatte verhindert. Der hakenförmige Abschnitt 20 ist mit Nockenflächen 21 versehen, die sich im wesentlichen unter einem Winkel von 45° zur Längsachse der Pedale erstrecken und so angeordnet sind, daß sie mit den Nockenflächen 14a der Schuhplatte zusammenwirken.

Wenn es gewünscht wird, die Schuhplatte von der Pedale freizugeben, verschwenkt der Benutzer seinen Fuß und somit die Schuhplatte im wesentlichen um die Achse 8 in jeder Richtung in der Ebene der Schuhplatte. Durch den Eingriff der Nockenflächen 14a und 21 wird die elastische Klaue nach hinten gepreßt, bis mit der Ecke der mit einer Fläche 7a in Eingriff stehenden Klaue der Abschnitt 7a der Rückseite der Schuhplatte mit reduziertem Radius von der Klaue freigegeben wird und nach oben und aus der Halteeinrichtung heraus bewegt werden kann. Aufgrund des Eingriffs des Stiftes 9 und der Nut 24 und der Krümmung der Flächen um die Achse 8 verläuft diese seitwärts gerichtete Drehbewegung glatt ab.

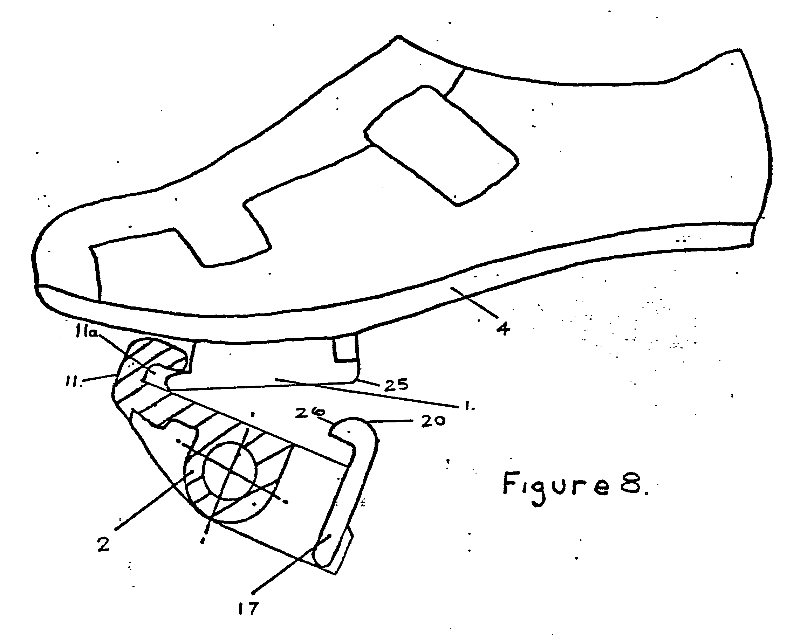

Um die Schuhplatte in der Pedale in Eingriff zu bringen, wird die vordere Lippe 6 der Schuhplatte unter das vordere Halteelement 11 in Eingriff gebracht, wie in Figur 8 gezeigt, und die Rückseite des Schuhes wird dann nach unten gedrückt. Die untere hintere Fläche 25 der Schuhplatte und die obere Vorderfläche 26 des hakenförmigen Abschnitts der Klaue sind gekrümmt ausgebildet, so daß durch deren Eingriff mit einem vom Benutzer ausgeübten abwärtsgerichteten Druck eine Rückwärtsbewegung der Klaue bewirkt wird, bis die Schuhplatte unter die Klaue einschnappt, wenn durch deren natürliche Elastizität diese in ihren unbelasteten Zustand zurückkehrt.

## Ansprüche

1. Fahrradpedale und Schuhplatte, **dadurch gekennzeichnet**, daß die Pedale (2) ein Formteil aus Kunststoff ist und eine einstückig darin eingeformte Einrichtung zum Halten der Schuhplatte (1) am Pedal (2) in einer Eingriffsstellung aufweist, welche eine Klaue (17) besitzt, die mit dem restlichen Teil der Pedale (2) elastisch verbunden ist, so daß sie in der normalen Eingriffsstellung der Pedale unbelastet ist, jedoch bei einer Drehung der Schuhplatte in ihrer eigenen Ebene zur Freigabe der Schuhplatte elastisch bewegbar ist.

2. Fahrradpedale in Verbindung mit einer Schuhplatte, die an einem Schuh befestigbar ist, **dadurch gekennzeichnet,** daß die Pedale (2) aus einem Kunststoff-Formteil besteht und eine Halteeinrichtung besitzt, die in der Eingriffsstellung der Schuhplatte (1) die Schuhplatte an der Pedale gegen eine Vorwärts-, Rückwärts- oder Aufwärtsbewegung sichert, wobei die Halteeinrichtung ein vorderes hakenförmiges Element, unter dem die Vorderseite der Schuhplatte (1) in der Eingriffsstellung angeordnet ist, eine feste hintere Eingriffseinrichtung, die eine Rückwärtsbewegung der Schuhplatte 1 in der Eingriffsstellung verhindert, und ein hinteres bewegliches hakenförmiges Klauenelement (17) aufweist, das so mit der Pedale geformt ist, daß es in der Eingriffsstellung eine Aufwärtsbewegung der Schuhplatte verhindert, das jedoch selbst unbelastet ist und nicht die Schuhplatte vorwärts drückt, sondern elastisch nach hinten bewegbar ist, um die Schuhplatte bei einer Drehung derselben in ihrer eigenen Ebene freizugeben.

3. Fahrradpedale und Schuhplatte nach Anspruch 1 oder 2, **dadurch gekennzeichnet,** daß die Vorderseite der Schuhplatte (1) und das vordere Eingriffselement der Halteeinrichtung derart mit einer Nut (9) und einem Stift (24), welche zusammenwirken, versehen ist, daß die Drehung der Schuhplatte zu deren Freigabe um die Achse des Stiftes erfolgt.

4. Fahrradpedale und Schuhplatte nach Anspruch 3, **dadurch gekennzeichnet,** daß die nach hinten weisende Fläche der Schuhplatte (1) um die Achse des Stiftes (24) gekrümmt ist und mit einer entsprechend gekrümmten, vorwärts weisenden festen Eingriffsfläche der hinteren Halteeinrichtung in Eingriff steht.

5. Fahrradpedale und Schuhplatte nach einem der vorangehenden Ansprüche, **dadurch gekennzeichnet,** daß sie aus Acetalharz besteht.

6. Fahrradpedale und Schuhplatte nach einem der vorangehenden Ansprüche, **dadurch gekennzeichnet,** daß die nach hinten weisende Fläche des mittleren Abschnitts der Schuhplatte mit einem geringeren Radius als die Außenrandabschnitte dieser Fläche um eine gemeinsame Achse gekrümmt ist.

Fig 1.

Fig 2.

Fig 3.

Fig 5.

Fig 4.

Fig 6.

Fig 7.

Figure 8.

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | EP-A-0 098 329 (BACCHILEGA) <br> * Figuren 1-6; Seite 3, Zeile 27 - Seite 6, Zeile 29 * <br> --- | 1 | B 62 M 3/08 |
| A | EP-A-0 163 615 (RAPISARDA) <br> * Figuren 1-9; Seite 5, Zeile 16 - Seite 13, Zeile 2 * <br> --- | 1 | |
| A | EP-A-0 146 218 (WINKIE) <br> * Figuren 1-4; Seite 8, Zeile 28 - Seite 18, Zeile 6 * <br> --- | 1 | |
| D,A | EP-A-0 146 454 (LOOK) <br> * Figures 1-7; Seite 5, Zeile 11 - Seite 9, Zeile 9 * <br> ----- | 1 | |

RECHERCHIERTE SACHGEBIETE (Int. Cl.3)

B 62 M

Der vorliegende Recherchenbericht wurde für alle Patentansprüche erstellt

| Recherchenort | Abschlußdatum der Recherche | Prüfer |
|---|---|---|
| DEN HAAG | 12-05-1989 | VANNESTE M.A.R. |